# EUROPEAN PATENT APPLICATION

(11) **EP 3 337 213 A1**
(43) Date of publication of application: **20.06.2018**
(21) Application number: 16835186.4
(22) Date of filing: 09.08.2016
(51) Int. Cl.: H04W 16/14, H04W 24/10, H04W 72/04

(54) **WIRELESS BASE STATION, USER TERMINAL, AND WIRELESS COMMUNICATION METHOD**

(30) Priority: 13.08.2015 JP 2015159947
(71) Applicant: NTT DOCOMO, INC., Chiyoda-ku Tokyo 100-6150 (JP)
(72) Inventor: HARADA, Hiroki, Tokyo 100-6150 (JP); NAGATA, Satoshi, Tokyo 100-6150 (JP); KAKISHIMA, Yuichi, Palo Alto, California 94304 (US)
(74) Representative: Hoffmann Eitle
(86) International application number: PCT/JP2016/073470
(87) International publication number: WO 2017/026489

(57) **Abstract**

The present invention is designed to allow co-presence with other systems, and, furthermore, achieve improved spectral efficiency in cells (for example, unlicensed bands) in which pre-transmission listening is employed. The present invention provides a transmission section that transmits a channel state information measurement reference signal, and a control section that controls the transmission of the channel state information measurement reference signal by employing listening, and the control section controls the channel state information measurement reference signal to be transmitted without being multiplexed with data and/or a control signal, and controls configuration information of the channel state information measurement reference signal that is transmitted without being multiplexed with data and/or a control signal to be transmitted.

## Description

### Technical Field

The present invention relates to a radio base station, a user terminal and a radio communication method in a next-generation mobile communication system.

### Background Art

In the UMTS (Universal Mobile Telecommunications System) network, the specifications of long term evolution (LTE) have been drafted for the purpose of further increasing high speed data rates, providing lower delays and so on (see non-patent literature 1). The specifications of LTE-advanced (Rel. 10 to 12) have been drafted for the purpose of achieving further broadbandization and higher speeds beyond LTE, and, in addition, for example, a successor system of LTE -- referred to as "5G" (5th generation mobile communication system) -- is under study.

In LTE of Rel. 8 to 12, the specifications have been drafted assuming exclusive operations in frequency bands that are licensed to operators -- that is, licensed bands. As licensed bands, for example, 800 MHz, 2 GHz and/or 1.7 GHz are used.

User traffic has been increasing steeply following the spread of high-performance user terminals/user equipment (referred to as "UE") such as smart-phones and tablets. Although more frequency bands need to be added to meet this increasing user traffic, licensed bands have limited spectra (licensed spectra). Consequently, a study is in progress to enhance the frequencies of LTE systems by using bands of unlicensed spectra (hereinafter referred to as "unlicensed bands") that are available for use apart from licensed bands (see non-patent literature 2).

For unlicensed bands, for example, 2.4 GHz, which is the same as in Wi-Fi (registered trademark), or the 5 GHz band and/or the like may be used. With Rel. 13 LTE, a study is in progress to execute carrier aggregation (CA) between licensed bands and unlicensed bands. Communication that is carried out by using unlicensed bands with licensed bands like this is referred to as "LAA" (License-Assisted Access). In the future, dual connectivity (DC) between licensed bands and unlicensed bands and stand-alone in unlicensed bands may become the subject of study under LAA.

### Citation List

### Non-Patent Literature

Non-Patent Literature 1: 3GPP TS 36. 300 "Evolved Universal Terrestrial Radio Access (E-UTRA) and Evolved Universal Terrestrial Radio Access Network (E-UTRAN); Overall Description; Stage 2"
Non-Patent Literature 2: AT&T, Drivers, Benefits and Challenges for LTE in Unlicensed Spectrum, 3GPP TSG-RAN Meeting #62 RP-131701

### Summary of Invention

### Technical Problem

A study is in progress to introduce interference control functionality to unlicensed bands, in order to allow co-presence with other operators' LTE, Wi-Fi or different systems. In Wi-Fi, LBT (Listen Before Talk), which is based on CCA (Clear Channel Assessment), is used as an interference control function within the same frequency.

Consequently, when unlicensed bands are configured in LTE systems, UL transmission and/or DL transmission may be controlled by implementing "listening" (for example, LBT) as an interference control function. In this case, there is a demand to enable both efficient and fair co-presence with other systems (for example, Wi-Fi) and other LTE operators, and efficient operation of frequencies.

The present invention has been made in view of the above, and it is therefore an object of the present invention to provide a radio base station, a user terminal and a radio communication method that can allow co-presence with other systems in cells (for example, unlicensed bands) in which pre-transmission listening is employed, and that can achieve improved spectral efficiency.

### Solution to Problem

One aspect of the present invention provides a radio base station that has a transmission section that transmits a channel state information measurement reference signal, and a control section that controls the transmission of the channel state information measurement reference signal by employing listening, and, in this radio base station, the control section controls the channel state information measurement reference signal to be transmitted without being multiplexed with data and/or a control signal, and controls configuration information of the channel state information measurement reference signal that is transmitted without being multiplexed with data and/or a control signal to be transmitted.

### Advantageous Effects of Invention

According to the present invention, it is possible to allow co-presence with other systems, and, furthermore, achieve improved spectral efficiency in cells in which pre-transmission listening is employed (for example, unlicensed bands).

### Brief Description of Drawings

FIG. 1A is a diagram to illustrate an example of an FBE radio frame configuration and FIG. 1B is a diagram to illustrate an example of an LBE radio frame configuration;
FIG. 2 is a diagram to illustrate examples of a burst period that is configured for transmission after DL-LBT;
FIG. 3 is a diagram to illustrate an example of a CSI measurement RS transmission method employing listening;
FIG. 4 is a diagram to illustrate an example of a CSI measurement RS transmission method employing listening, according to the present embodiment;
FIG. 5 is a diagram to illustrate an example of a radio frame configuration in which single-CCA is used when a CSI-RS is transmitted, according to the present embodiment;
FIG. 6 is a diagram to illustrate an example of a radio frame configuration in which extended CCA is used when a CSI-RS is transmitted, according to the present embodiment;
FIG. 7A is a diagram to illustrate an example of a radio frame configuration in which a radio base station transmits two CSI-RSs comprised of four OFDM symbols, in a row, according to the present embodiment, and FIG. 7B is a diagram to illustrate an example of a radio frame configuration in which a radio base station transmits three CSI-RSs comprised of six OFDM symbols, in a row, according to the present embodiment;
FIG. 8 is a schematic diagram to illustrate an example of a radio communication system according to the present embodiment;
FIG. 9 is a diagram to explain an overall structure of a radio base station according to the present embodiment;
FIG. 10 is a diagram to explain a functional structure of a radio base station according to the present embodiment;
FIG. 11 is a diagram to explain an overall structure of a user terminal according to the present embodiment; and
FIG. 12 is a diagram to explain a functional structure of a user terminal according to the present embodiment.

### Description of Embodiments

As mentioned earlier, in unlicensed bands, interference control functionality is required in order to allow co-presence with other operators' LTE, Wi-Fi (registered trademark), or different systems. In Wi-Fi, the function celled "LBT" (Listen Before Talk), which is based on CCA (Clear Channel Assessment), is used as an interference control function within the same frequency. In Japan and Europe, the LBT function is stipulated as mandatory in systems that are run in the 5 GHz unlicensed band, such as Wi-Fi.

Consequently, a study is in progress to apply interference control in the same frequency by executing listening before transmitting signals even in systems where LTE/LET-A is run in unlicensed bands (for example, LAA systems). In a carrier in which listening is configured, radio base stations and user terminals of a plurality of systems may use the same frequency bands on a shared basis.

The application of listening makes it possible to prevent interference between LAA and Wi-Fi, interference between LAA systems, and so on. Furthermore, even when user terminals that can be connected are controlled independently for every operator that runs an LAA system, it is possible to reduce interference without learning the details of each operator's control, by means of listening.

Here, "listening" refers to the operation which a given transmission point (for example, a radio base station, a user terminal, etc.) performs before transmitting signals in order to check whether or not signals to exceed a predetermined level (for example, predetermined power) are being transmitted from other transmission points. Also, this "listening" performed by radio base stations and/or user terminals may be referred to as "LBT," "CCA," "carrier sensing" and so on.

For example, when LBT is employed in an LTE system, a transmission point (an LTE-U base station and/or a user terminal) performs listening (LBT, CCA) before transmitting UL (uplink) signals and/or DL (downlink) signals in an unlicensed band cell. Then, if no signal from other systems (for example, Wi-Fi) and/or other LAA transmission points is detected, the transmission point carries out communication in the unlicensed band.

If received power that is equal to or lower than a predetermined threshold is measured in LBT, the transmission point determines that the channel is in the idle state (LBT-idle), and carries out transmission. When a "channel is in the idle state," this means that, in other words, the channel is not occupied by a certain system, and it is equally possible to say that the channel is "idle," the channel is "clear," the channel is "free," and so on.

On the other hand, when the received power that is measured in LBT exceeds a predetermined threshold, the transmission point determines that the channel is in the busy state (LBT-busy), and limits transmission. Procedures that are taken when listening yields the result "LBT-busy" include (1) making a transition to another carrier by way of DFS (Dynamic Frequency Selection), (2) applying transmission power control (TPC), (3) holding transmission (stopping transmission or waiting for transmission), and so on. In the event LBT-busy is yielded, LBT is carried out again with respect to this channel, and the channel becomes available for use only after it is confirmed that the channel is in the idle state. Note that the method of judging whether a channel is in the idle state/busy state based on LBT is by no means limited to this.

For example, assume a case where, when a user terminal that communicates by using a carrier (which may also be referred to as a "frequency") of an unlicensed band detects another entity (another user terminal and/or the like) that is communicating in this unlicensed band carrier, transmission is banned in this carrier. In this case, this user terminal executes LBT at a timing that is a predetermined period ahead of a transmission timing. By executing LBT, the user terminal searches the whole band of the applicable carrier at a timing that is a predetermined period ahead of a transmission timing, and checks whether or not other devices (radio base stations, LAA-UEs, Wi-Fi devices and so on) are communicating in this carrier's band. Only if it is confirmed that no such communication is in progress, is transmission carried out using this carrier.

On the other hand, if only just a portion of the band is detected to be used by another device -- that is, if the received power of a signal from another device entering this band exceeds a threshold -- the user terminal stops its transmission. Here, if the received signal power in the LBT period is higher than a predetermined threshold, the channel is determined to be in the busy state (LBT-busy). If the received signal power in the LBT period is lower than the predetermined threshold, the channel is determined to be in the idle state (LBT-idle).

Also, there are roughly two types of LBT mechanisms -- namely, LBE (Load-Based Equipment) and FBE (Frame-Based Equipment). With LBE, initial CCA is executed, and transmission is started if LBT-idle is yielded (it is determined that the channel is in LBT-idle), or the ECCA (extended CCA) procedure is executed if LBT-busy is yielded (it is determined that the channel is in LBT-busy). That is, LBE refers to a mechanism of extending the carrier sensing duration when the result of carrier sensing indicates that the channel cannot be used, and continuing executing carrier sensing until the channel becomes available for use. In LBE, random back-off is required to avoid contention adequately.

FBE executes carrier sensing in fixed timings and in a fixed cycle, and starts transmission if LBT-idle is yielded, or waits until the next carrier sensing timing if LBT-busy is yielded. That is, FBE has a fixed frame cycle, and is a mechanism of carrying out transmission if the result of executing carrier sensing in a predetermined frame indicates that the channel is available for use, and not making transmission but waiting until the next carrier sensing timing if the channel cannot be used.

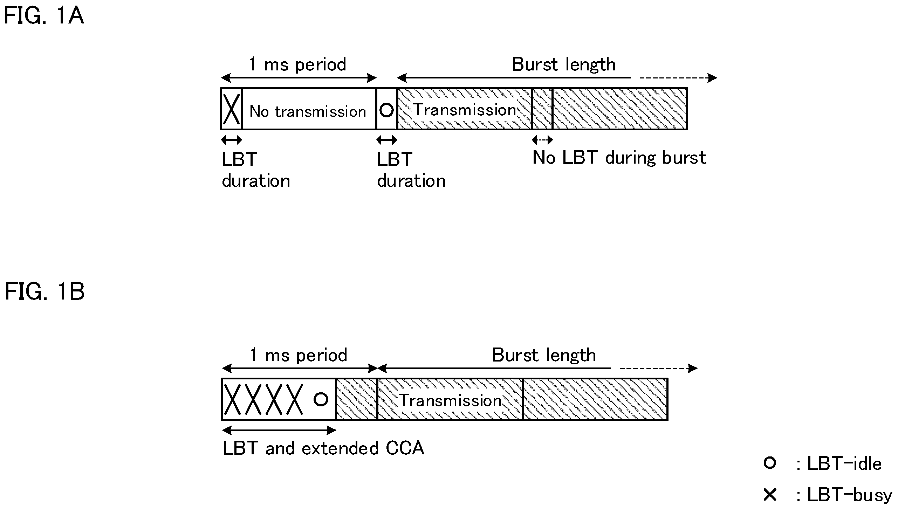

FIGs. 1 provide diagrams, each illustrating an example of a radio frame configuration in LBT. FIG. 1A illustrates an example of an FBE radio frame configuration. In the event of FBE, the LBT duration and the LBT cycle are fixed, and LBT is performed in a predetermined number of symbols (for example, one to three symbols) and a cycle (for example, every 1 ms). Meanwhile, FIG. 1B illustrates an example of an LBE radio frame configuration. In the event of LBE, the LBT duration is not fixed. For example, LBT symbols may continue until a predetermined condition is fulfilled. To be more specific, a radio base station may continue executing LBT until LBT-idle is observed.

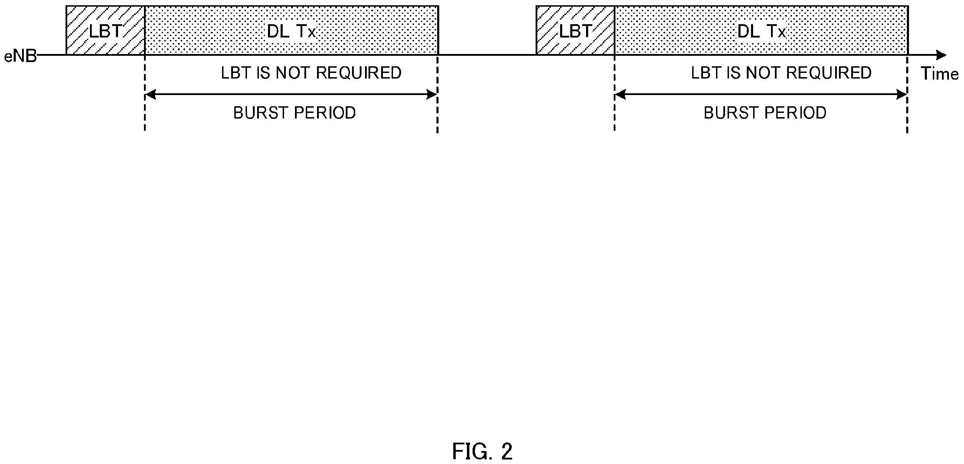

When the result of listening for DL transmission (DL-LBT) executed by a radio base station indicates LBT-idle, the radio base station can be allowed to skip LBT and transmit signals, for a predetermined period (see FIG. 2). FIG. 2 is a diagram to illustrate examples of a burst period that is configured for transmission after DL-LBT. In cells where listening is employed, the period after listening (after LBT-idle is yielded) in which transmission can be made without executing LBT is referred to as the burst period (also referred to as the "burst transmission period," "burst length," "maximum burst length," "maximum possible burst length" and so on).

In this way, even in LTE/LTE-A systems that use unlicensed bands, listening may be used before UL transmission and/or DL transmission are made. In this case, there is a demand to enable both efficient and fair co-presence with other systems (for example, Wi-Fi) and other LTE operators, and efficient operation of frequencies.

To enable fair co-presence with other systems (for example, Wi-Fi), it may be possible to employ a mechanism for applying random back-off to listening even when LTE/LTE-A systems are used in unlicensed bands, and, furthermore, making the window size in random back-off variable. Random back-off refers to the mechanism, whereby, even when a channel enters the idle state, each transmission point does not start transmission soon, but holds transmission for a randomly-configured period and then starts transmission when the channel is clear. By this means, transmission opportunities are distributed among a plurality of transmission points, and fairness is guaranteed. The window size in random back-off (also referred to as "contention window" (CW)) refers to the window size for determining the range of the back-off period, which is configured randomly.

For example, when a channel is in the occupied state (busy state) in an unlicensed band, each transmission point (access point) starts transmitting data when the channel is determined to be in the idle state based on listening. In this case, if a plurality of transmission points that have been waiting for the channel to enter the idle state start transmitting all at once, this has a high possibility of leading to collisions between transmission points. So, in order to reduce collisions between transmission points, each transmission point does not start transmission soon even when a channel assumes the idle state, but holds transmission for a randomly-configured period to reduce the likelihood of collisions between transmission points (random back-off).

The back-off period to be configured for each transmission point can be determined based on counter values (random values), which are configured on a random basis. The range of counter values is determined based on the contention window (CW) size, and, for example, the counter values are configured on a random basis from the range of 0 to the CW size (integer value).

Now, in Rel. 13 LTE, channel state information (CSI) measurement and reporting method in LAA are under study. In channel state information measurements and reporting, a user terminal (UE) measures the channel states of paths where signals transmitted from a radio base station to the user terminal travel, by measuring channel state information (measurement) reference signals that are transmitted from the radio base station (eNB) (including, for example, the CSI-RS (Channel State Information-Reference Signal), the CRS (Cell-specific Reference Signal) and so on). Also, the user terminal reports the channel state measurement results, measured based on the channel state information reference signals, to the radio base station. To be more specific, the user terminal receives the channel state information measurement reference signals transmitted from the radio base station, and, by using periodic or aperiodic reporting that is specified by the radio base station, the user terminal reports channel state information (CSI) to the radio base station. By this means, the radio base station can acquire channel state information about the paths between the radio base station and the user terminal. The radio base station controls the downlink data (DL data) to transmit to the user terminal based on the channel state information that is acquired.

In Rel. 13 LTE, an LAA cell may be used as a secondary cell (SCell). Here, to allow CSI measurements in an LAA cell where an SCell is employed, a radio base station transmits CSI measurement reference signals (for example, the CSI-RS) to a user terminal based on LBT. That is, a radio base station can transmit CSI measurement reference signals only after LBT is executed. Also, to report aperiodic CSI from a user terminal, a licensed carrier or an SCell to employ LAA (LAA SCell) is used.

As a method of transmitting RSs for CSI measurements in a cell where listening is employed, it may be possible to include the CSI measurement RSs in other data transmission. For example, it may be possible to (A) use burst transmission in which CSI-RSs are multiplexed over DL data (for example, the PDSCH (Physical Downlink Shared Channel) (data burst including RSs for CSI measurements), or (B) use burst transmission in which CSI-RSs are multiplexed over DL DRSs (Discovery Reference Signals) (DL DRS burst including RSs for CSI measurements).

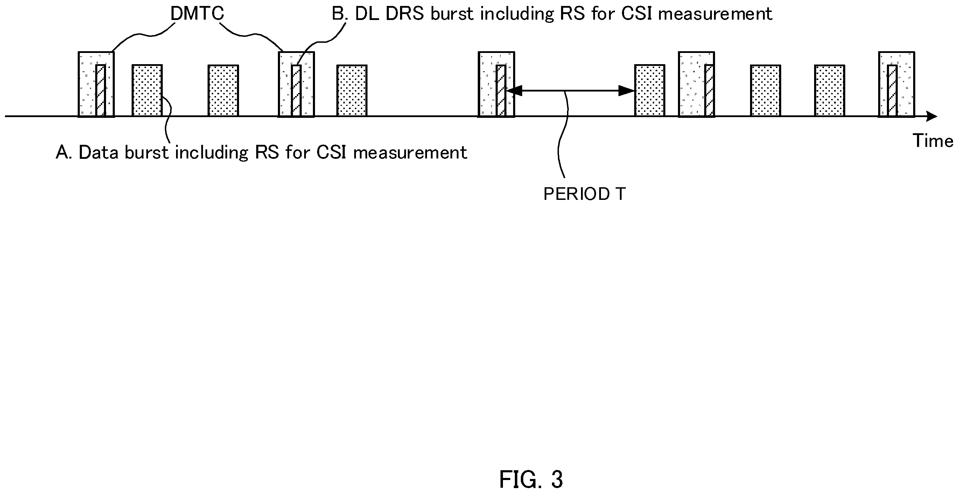

FIG. 3 illustrates an example of a CSI measurement RS transmission method to use LBT. FIG. 3 illustrates signals that are transmitted from a radio base station to a user terminal in chronological order. "A" and "B" in the drawings to be described below correspond to the above-described CSI-RS transmission methods (A) and (B). Also, "DMTC" indicates the MTC (Measurement Timing Configuration) for discovery, and DL DRSs, including CSI measurement RSs, are transmitted from the radio base station within the range specified by the DMTC, and the user terminal receives the DL DRSs, including CSI measurement RSs, in this range. Also, the user terminal measures CSI based on, for example, information configured by the radio base station, and sends out periodic or aperiodic reports based on commands from the radio base station.

The radio base station can transmit CSI measurement RSs, included in DL data, to the user terminal, by using the above-noted method of (A), and estimate channel states based on CSI transmitted from the user terminal. Furthermore, the radio base station can also transmit CSI measurement RSs, included in DL DRSs, to the user terminal, by using the above-noted method of (B), and estimate channel states based on CSI transmitted from the user terminal.

Here, the DL data transmission intervals illustrated in (A) are not periodic, and the DL DRS transmission intervals illustrated in (B) have a long cycle. Consequently, there is a threat that, after CSI is reported from the user terminal to the radio base station, a long period (for example, the period T illustrated in FIG. 3) might pass before a downlink data signal is actually received. In this case, since the channel states between the radio base station and the user terminal change over time, there is a possibility that channel states estimated from RS measurement results are significantly different from the actual channel states. If link adaptation is applied to downlink signals based on channel states estimated in this way and downlink data is transmitted accordingly, the link adaptation to apply to downlink signals cannot be adequate.

If inadequate link adaptation is applied to downlink signals, there is a high possibility that the downlink signals which a user terminal receives suffer damaged radio communication quality. In this way, if only a method that is based on measurements of RSs multiplexed over burst transmission is used in radio communication in which LAA is used, the quality of radio communication is likely to deteriorate due to inadequate measurement intervals.

So, the present inventors have found out a new method of transmitting CSI measurement reference signals (for example, the CSI-RS) based on LBT, without involving data or control signals. For example, in addition to transmitting CSI measurement reference signals that are multiplexed over the PDSCH and/or transmitting CSI measurement reference signals that are multiplexed over DL DRSs as heretofore, at least CSI measurement reference signals that are not multiplexed with data and/or control signals are transmitted. The CSI measurement reference signals that are not multiplexed with data and/or control signals may assume a structure in which CSI measurement reference signals alone are multiplexed in transmission time intervals (TTIs), or a structure in which CSI measurement reference signals are multiplexed with other reference signals.

By this means, by contrast with the conventional way of transmitting only CSI measurement reference signals that are multiplexed over DL data or CSI measurement reference signals that are multiplexed over DL DRSs, and measuring channel states, CSI measurement reference signals that are not multiplexed with data and/or control signals can be additionally transmitted based on LBT, so that it is possible to make the intervals between channel state measurements short. Consequently, the radio base station can measure channel states in closer timings to downlink transmission, so that channels states can be estimated more adequately. As a result of this, the radio base station can apply more adequate link adaptation to downlink signal transmission, and realize efficient use of resources in LAA DL communication.

Now, the present embodiment will be described in detail below with reference to the accompanying drawings. Although the following embodiment will be described assuming that a carrier where listening is configured is an unlicensed band, this is by no means limiting. The present embodiment is applicable to any carriers (or cells) in which listening is configured, regardless of whether this carrier is a licensed band or an unlicensed band. Furthermore, although cases will be described with the present embodiment where small cells are used as radio base stations, this is by no means limiting.

Also, although examples will be described with the following description where listening for DL transmission is executed in radio base stations, this is by no means limiting. The present embodiment can be applied to any transmission points (for example, a user terminal) that employ listening. For example, the radio base stations in the following description are inter-changeable with user terminals. Also, although cases will be illustrated in the following description where listening is applied to LTE/LTE-A systems, the present embodiment is by no means limited to this. The present embodiment is applicable to any cases where listening is executed before signals are transmitted, and channel states are estimated by using channel state information reference signals.

Also, although cases will be illustrated in the following description where the CSI-RS is used as the reference signal for channel state information measurements, this is by no means limiting. Other reference signals can be used as long as channel state information can be measured with these reference signals. For example, reference signals such as the CRS (Cell-specific Reference Signal) and others can be used as reference signals for channel state information measurements. Also, it is possible to use only one of the CSI-RS and the CRS, or use both. Also, although cases will be described with the following examples in which CSI-RSs that are not multiplexed with data and/or control signals are used, this is by no means limiting. For example, CSI-RSs alone may be used.

Furthermore, although the following description will show a method in which information as to whether or not reference signals are transmitted from radio base stations, information about parameters that indicate locations and so on are reported from radio base stations and configured in user terminals by using higher layer signaling (signals), this method is by no means limiting. For example, these pieces of information may be reported by using physical layer signals. Also, for the information that is reported from radio base stations to user terminals, it is possible to use either explicit signals or implicit signals, or combine these. Also, the parameters that are reported from radio base stations and configured in user terminals are by no means limited to the ones that will be described below as examples.

Also, the information to be included in signals transmitted from user terminals to radio base stations can be any channel state information that shows channel states, and is by no means limited to CSI. Also, reports to be sent from user terminals to radio base stations may be sent in aperiodic reporting or in periodic reporting. Furthermore, user terminals may send reports to radio base stations based on commands from radio base stations.

### (First Example)

With a first example, a case will be descried in detail, in which channel state information measurement reference signals, which are not multiplexed with data and/or control signals, are transmitted based on LBT, in addition to CSI-RSs, which are multiplexed and transmitted with DRSs and data information.

According to the first example, a radio base station to form an LAA SCell and a user terminal are connected. The radio base station uses an unlicensed band, and is a small base station that forms a small cell.

In radio communication between the radio base station and the user terminal, listening is executed before signals are transmitted. Here, downlink (DL) signals, to which listening has been applied, are transmitted from the radio base station to the user terminal.

When the radio base station transmit a CSI-RS to the user terminal, the CSI-RS is transmitted by way of (A) burst transmission in which the CSI-RS is multiplexed over DL data (data burst including RS for CSI measurement), (B) burst transmission in which the CSI-RS is multiplexed over a DL DRS (DL DRS (Discovery Reference Signal) burst including RS for CSI measurement), or (C) transmission in which the CSI-RS is not multiplexed with data and/or control signals (RS for CSI measurement only). By using above (A) to (C), the radio base station according to the first example configures the user terminal to carry out CSI measurements based on CSI-RSs and send reports to the radio base station. Prior to the operations of (A) to (C), the radio base station executes listening (LBT, CCA), makes sure that the channel is in the idle state, and then transmits signals to the user terminal in (A) to (C).

The radio base station can transmit CSI-RS configuration parameter information (hereinafter "CSI-RS Conf."), which indicates, for example, the cycle, the subframe offset, the resource configuration of the CSI-RS to be measured, to the user terminal, as configuration information, by using higher layer signaling (for example, RRC (Radio Resource Control) signaling, MAC (Medium Access Control) signaling and broadcast information (MIBs (Master Information Blocks), SIBs (System Information Blocks)). Furthermore, the radio base station can configure these pieces of information in the user terminal. Here, the parameter information may include only part of the above-described items of information, or include all of them.

The radio base station can configure configuration information that matches the CSI-RS to transmit, in the user terminal. For example, when the radio base station uses the transmission of (C), in which the CSI-RS is not multiplexed with data and/or control signals, CSI-RS Conf. may be transmitted. Also, when the radio base station does not use the transmission of (C), in which the CSI-RS is not multiplexed with data and/or control signals, CSI-RS Conf. may not be transmitted. That is, depending on whether or not CSI-RS Conf. is transmitted to the user terminal (depending on whether or not transmission takes place), the radio base station may send a report as to whether or not the radio base station uses the transmission of (C) of not multiplexing the CSI-RS with data and/or control signals. By this means, based on whether or not configuration information is transmitted to the user terminal, the radio base station can indicate whether the or not the CSI-RS is transmitted without being multiplexed with data and/or control signals.

Note that the CSI-RS Conf. may be the kind of CSI-RS Conf. that is applied only to the transmission of (C), in which the CSI-RS is not multiplexed with data and/or control signals. Alternatively, this may be the kind of CSI-RS Conf. that is applied to the transmissions of (A) to (C) in common. When CSI-RS Conf. that is applied only to the transmission of (C) in which the CSI-RS is not multiplexed with data and/or control signals is transmitted, the configurations that are applied to the transmissions of (A) and (B) may be separately configured in the user terminal.

In the first example, the user terminal carries out different operations, which will be described below, depending on whether or not parameters are configured from the radio base station.

When the above-described CSI-RS Conf. parameters are not configured, the user terminal assumes that the CSI-RS-only transmission of (C) is not used. The user terminal waits for receiving (on standby to receive) the CSI-RSs included in the burst transmissions of (A) and (B) in the above-described CSI-RS transmission methods, and carries out CSI measurements and reporting by using the CSI-RSs that are included and received in the burst transmissions of (A) and (B) (see, for example, FIG. 3).

When the CSI-RS Conf. for (C) is not transmitted and the configurations to be applied to the transmissions of (A) and (B) are reported apart from the CSI-RS Conf. for (C), the user terminal carries out CSI measurements and reporting with respect to the CSI-RSs that are included in the burst transmissions of (A) and (B).

When the above-described parameters are configured, the user terminal assumes that CSI-RS-only transmission will take place. In this case, among the above-described CSI-RS transmission methods, the user terminal waits for receiving the CSI-RSs that are transmitted in (C) without being multiplexed with data and/or control signals (burst transmission), in addition to the CSI-RSs that are included in the burst transmissions of (A) and (B). The user terminal waits to receive the CSI-RSs, in the resource locations indicated by the CSI-RS Conf. reported from the radio base station, assuming that the CSI-RSs of (C) are transmitted without being multiplexed with data and/or control signals. Then, the user terminal carries out CSI measurements and reporting by using the CSI-RSs included received in (A) to (C).

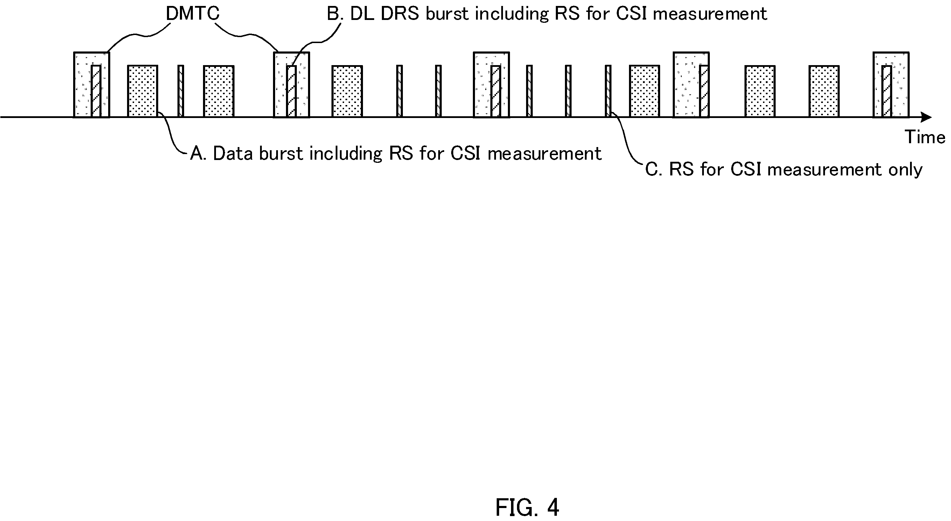

Now, the CSI-RSs that are received when CSI-RS Conf. parameters are configured in the user terminal will be described with reference to FIG. 4. FIG. 4 is a diagram to illustrate an example of a CSI measurement RS transmission method that employs listening, according to the present embodiment. Parts that are the same as in FIG. 3 will not be described again. "C" in FIG. 4 corresponds to the above-described CSI-RS transmission method (C).

As illustrated in FIG. 4, the radio base station carries out the burst transmissions of (A) and (B), which involve multiplexing of CSI-RSs. Furthermore, when LBT confirms that the channel is in the idle state, the radio base station additionally carries out the transmission of (C), in which CSI-RSs are transmitted without being multiplexed with data and/or control signals. By this means, compared to when only the transmissions of (A) and (B) are used (see, for example, FIG. 3), the frequency of CSI measurements increases, so that the intervals between CSI measurements can be made short. Consequently, newer CSI data can be used as the CSI measurement information to use in DL data transmission.

By employing this structure, channel states can be estimated by using more accurate CSI. This makes it possible to apply accurate link adaptation to DL data, so that it is possible to allow co-presence with other systems, and, furthermore, achieve improved spectral efficiency.

### (LBT operation in radio base station)

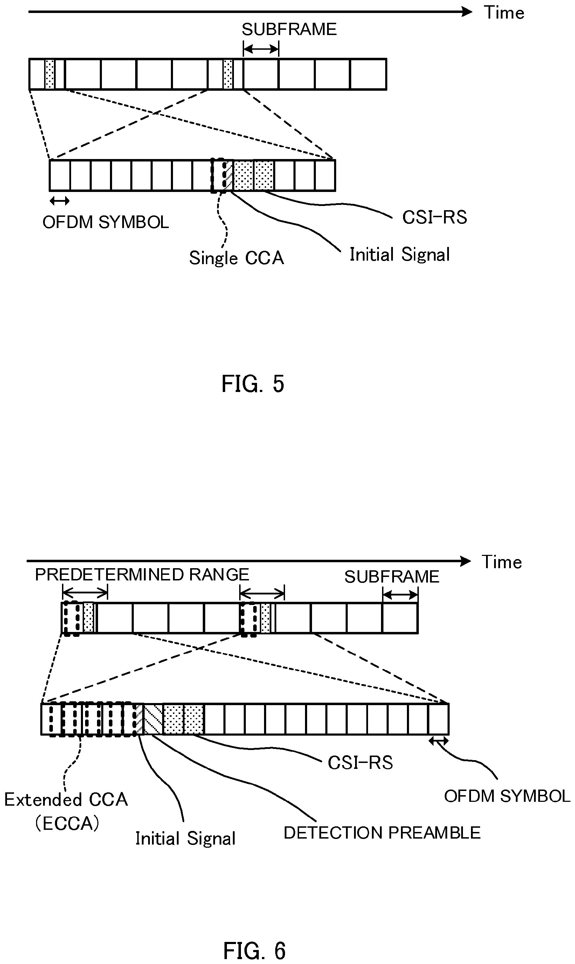

Now, the LBT operation which the radio base station performs by using CCA before transmitting CSI-RSs will be described with reference to FIG. 5. FIG. 5 is a diagram to illustrate an example of a radio frame configuration in which single-CCA is used when CSI-RSs are transmitted. Here, one CSI-RS is comprised of two OFDM symbols.

As illustrated in FIG. 5, the radio base station executes LBT that uses one CCA (single CCA), before transmitting a CSI-RS, which is configured using the CSI-RS Conf. reported to the user terminal. Here, it is preferable if the radio base station executes CCA in the OFDM symbol immediately before the OFDM symbol that is used to transmit the CSI-RS.

When CCA-based LBT succeeds -- that is, when the channel that is planned to be used to transmit the CSI-RS is confirmed to be in the idle state -- the radio base station may transmit an initial signal (IS) after transmitting the CCA, before transmitting the CSI-RS. By using an IS, for example, even when time has passed since the time the radio base station transmitted a signal last time and the signal in receipt on the terminal end requires an adjustment of gain, it is possible to apply AGC (Auto Gain Control) based on the IS. By this means, it is possible to apply adequate received power control in accordance with channel states. Also, by transmitting signals in a continuous manner, it is possible to prevent other devices in the transmission-target band from occupying channels.

In this way, when CSI-RSs are used as channel state information measurement reference signals, it is possible to transmit signals continuously after LBT confirms that the channel is in the idle state. On the other hand, when, for example, discrete signals are used as channel state information measurement reference signals, unlike when CSI-RSs are used, signals cannot be transmitted in a continuous manner. Consequently, when channel state information is measured in existing Rel. 12 or earlier LTE, it is preferable to use CSI-RSs. Note that, for example, even when CRSs are used, if a new structure to place and transmit a plurality of CRSs are in a row is used, the same effect can be achieved as when a structure to use CSI-RSs is employed.

### (Variation)

The radio base station may also transmit a CSI-RS in a given timing within a certain range (predetermined range) from the resource location specified by the CSI-RS Conf. configured in the user terminal. That is, instead of reporting to the user terminal a specific location where a CSI-RS is transmitted, the radio base station can indicate a certain range in which transmission might take place. This certain range is, for example, the length of one subframe. By configuring a certain range in this way, it becomes possible to transmit CSI-RSs in a variety of timings, so that the radio base station can control the transmission of CSI-RSs, flexibly, depending on the result of CCA. Also, by keeping the timings to transmit CSI-RSs in a certain range, it is possible to keep the user terminal's standby for receipt within a certain range, so that it is possible to keep the load of the user terminal to a certain level or less, and, furthermore, increase the rate of CSI-RS transmission.

FIG. 6 is a diagram to illustrate an example of a radio frame configuration in which ECCA (extended CCA) is used when a CSI-RS is transmitted. As illustrated in FIG. 6, in this case, the radio base station executes LBT, based on ECCA (extended CCA) using a plurality of CCAs, within a certain range from the configured location. When the CCA-based LBT succeeds -- that is, when the channel that is planned to be used to transmit the CSI-RS is confirmed to be in the idle state -- the radio base station may transmit an IS. Note that, in the case illustrated in FIG. 6, the mechanism of LBE (Load-Based Equipment) may be employed.

### (Detection preamble)

Also, after transmitting the IS, and before transmitting the CSI-RS, the radio base station may also transmit a detection preamble.

The user terminal may measure CSI, on the assumption that a CSI-RS is transmitted, at a given timing within a certain range from the resource location configured in the CSI-RS Conf. reported from the radio base station. In this case, the user terminal may be on standby to receive the detection preamble that is transmitted immediately before a CSI-RS, or a CSI-RS. When the detection preamble the user terminal is on standby to receive is received, the user terminal can receive the CSI-RS that is placed in the following OFDM symbols.

Note that the radio base station may configure a CMTC (CSI Measurement Timing Configuration) that indicates a certain range in which CSI-RS transmission might take place, as parameter information to configure in the user terminal as CSI-RS Conf., instead of CSI-RS cycle information, subframe offset information and/or the like.

As described above, according to the first example, a radio base station executes CCA-based LBT before transmitting a CSI-RS, and, furthermore, transmits an IS. In this way, the radio base station can prevent other signals from interrupting while CSI-RSs are transmitted, and improve the spectral efficiency in LAA with accurate CSI measurements. Also, since a user terminal is reported that a CSI-RS is going to be transmitted in a resource location that is reported in advance or within a predetermined range of the resource location, the user terminal's load can be reduced compared to when the user terminal has to be on standby over the whole area to receive the CSI-RS.

Furthermore, since the first example is designed so that a radio base station transmits a detection preamble before transmitting a CSI-RS, a user terminal has only to be on standby to receive the detection preamble, not the CSI-RS itself. By allowing the user terminal to be on standby to receive a detection preamble in this way, the user terminal's load can be reduced compared to when the user terminal has to be on standby to receive a CSI-RS itself.

### (Second Example)

As a second example, an example to use LBT that is based on CCA in CSI-RS transmission will be described. In the second example, a radio base station performs either of the following two operations depending on the result of CCA.

When the result of executing CCA makes it clear that the channel is in the idle state, the radio base station can transmit a CSI-RS without applying random back-off. For example, when the result of executing CCA once shows that the channel is in the idle state, the radio base station can transmit a CSI-RS. When random back-off is not applied, the radio base station can transmit signals a short period after CCA.

When the result of executing CCA shows that the channel is occupied by another device, the radio base station determines that CSI-RSs cannot be transmitted in the present state. In this case, the radio base station may control CCA in the following manner.

The radio base station does not execute CCA until the next cycle. Alternatively, the radio base station continues executing CCA for a certain period (range), and starts transmission at the timing the channel enters the idle state.

When the radio base station does not execute CCA until the next cycle, as illustrated in FIG. 5, the radio base station does not execute CCA for a predetermined period. In other words, the radio base station determines based on the result of listening that transmission is not possible, the radio base station does not execute listening for a predetermined period. By this means, it is possible to avoid applying CCA for no purpose when the channel is occupied. In this case, the cycle can be made, for example, 5 ms or 10 ms, which is also the transmission cycle of CSI-RSs. Note that, in this case, the mechanism of FBE (Frame-Based Equipment) may be applied.

When CCA continues being executed for a certain period and transmission is made at the timing the channel becomes idle, the radio base station continues executing CCA as illustrated in FIG. 6. In other words, when the radio base station determines based on the result of listening that transmission is not possible, the radio base station executes listening for an additional certain period. In this case, a user terminal assumes that a CSI-RS is going to be transmitted at a given timing in a certain range. Consequently, the user terminal waits for receiving a CSI-RS in this certain range. The user terminal waits, for example, for receiving a detection preamble that is transmitted immediately before a CSI-RS.

Here, if the certain range in which the user terminal is on standby for receipt is expanded, the possibility that the user terminal is able to measure CSI-RSs might increase, but, at the same time, the user terminal's load, including power consumption, increases. Consequently, the certain range to place the user terminal on standby for receipt needs to be configured to an adequate range. Note that the certain range to place the user terminal on standby to receive CSI-RSs may be determined in advance, or can be reported or configured from the radio base station via higher layer signaling and so on. Also, these may be combined and configured.

### (Third Example)

As a third example, examples of operations of a radio base station and a user terminal when a CSI-RS is successfully transmitted will be described.

### (Skip operation)

When a radio base station successfully transmits a CSI-RS to a user terminal, the radio base station does not transmit (do suspend or "skips") new CSI-RSs for a certain period following the timing the CSI-RS was transmitted. In this case, the radio base station may skip the sequence of CSI-RS transmission operations even when CSI-RSs are configured for transmission.

Also, when the user terminal successfully receives a CSI-RS that is transmitted from the radio base station, the user terminal assumes that CSI-RSs are not transmitted from the radio base station for a certain period following the timing the CSI-RS was transmitted. In this case, even if the resource locations of CSI-RSs are configured from the radio base station in advance, the user terminal can skip CSI-RS measurements and reporting regardless of what cycle, subframe offset and so on are configured.

Also, a CSI-RS that is subject to the decision of skipping does not necessarily have to be (C) a CSI-RS that is transmitted without being multiplexed with data and/or control signals, and may be (A) an CSI-RS included in a data burst or (B) a CSI-RS included in a DL DRS burst. If one of these CSI-RSs is successfully transmitted, the user terminal may skip the CSI-RS receiving operations for a certain period. Alternatively, the user terminal may skip only the receiving operations for CSI-RSs of certain transmission methods. For example, a user terminal that has successfully received (A), (B) and (C) may skip (C) alone, or skip (C) and (A).

In this way, it is possible to prevent the radio base station from transmitting CSI-RSs in an unnecessarily short cycle (high frequency). Also, this makes it possible to improve spectral efficiency, and to reduce the user terminal's load.

### (Fourth Example)

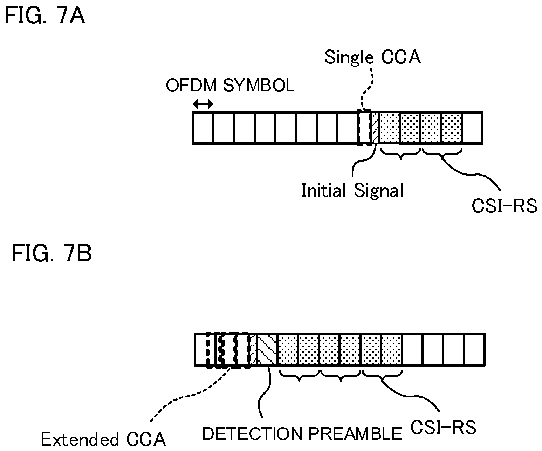

With a fourth example, an example structure in which a radio base station transmits a plurality of CSI-RSs on consecutive OFDM symbols will be described. FIGs. 7 provide diagrams to illustrate examples of radio frame configurations in which a radio base station transmits a plurality of CSI-RSs.

### (Continuous transmission of multiple CSI-RSs)

When transmitting a plurality of CSI-RSs on consecutive OFDM symbols, a radio base station may perform the transmission operations on the OFDM symbols in the following manner.

The radio base station transmits a plurality of CSI-RSs continuously in time on predetermined consecutive OFDM symbols, which are reported from the radio base station to a user terminal in advance. Alternatively, after having confirmed the channel is in the idle state based on LBT that uses CCA, the radio base station may transmit a detection preamble to the user terminal, and, following the detection preamble, transmit a plurality of CSI-RSs in a row (successively).

Also, according to the fourth example, a user terminal may report to a radio base station whether or not the user terminal can measure a plurality of consecutive CSI-RSs (symbols). For example, the user terminal can transmit its capabilities to the radio base station in advance, and report in advance whether or not the user terminal is capable of measuring a plurality of CSI-RSs. The user terminal may also be structured to report, by using capabilities, the number of CSI-RS symbols which the user terminal can measure. Here, the capabilities are configured as adequate depending on the environment.

First, a case will be described in which, on resources which a radio base station transmits, a plurality of CSI-RSs are transmitted on predetermined consecutive OFDM symbols, which are reported from the radio base station to a user terminal in advance. In this case, after having confirmed the channel is in the idle state based on LBT that uses (single) CCA, the radio base station transmits an IS, and determines the number of CSI-RSs to transmit based on capabilities. Also, the radio base station transmits CSI-RSs in resource locations that are determined in advance. For example, FIG. 7A illustrates a case where two CSI-RSs, comprised of four OFDM symbols, are transmitted in a row. The user terminal receives a plurality of CSI-RSs, and reports CSI to the radio base station.

Next, a case will be described in which, on resources which a radio base station transmits, after it is confirmed that the channel is in the idle state (LBT-idle) based on LBT that uses (E)CCA (CCA or ECCA), a detection preamble is transmitted to a user terminal, and a plurality of CSI-RSs are transmitted. In this case, the radio base station transmits an IS after confirming that the channel is in the idle state based on LBT that uses (E)CCA. After that, the radio base station transmits a detection preamble, and determines the number of CSI-RSs to transmit based on capabilities. Also, a case will be illustrated in which the radio base station transmits CSI-RSs at a given timing in a certain range. For example, FIG. 7B illustrates a case in which three CSI-RS, comprised of six OFDM symbols, are transmitted in a row. The user terminal receives a detection preamble at a given timing in the certain range, receives a plurality of CSI-RSs, and reports CSI to the radio base station.

In this way, by making it possible to measure a plurality of CSI-RS symbols, it becomes possible to increase the number of CSI-RS to use to measure CSI, which then makes it possible to improve the accuracy of CSI. Also, since the radio base station knows the capabilities, it becomes possible to determine the number of CSI-RSs to transmit in accordance with user terminal capabilities, the environment in which radio communication takes place and so on, so that it is possible to avoid damaging spectral efficiency.

Also, when a radio base station and a plurality of user terminals are connected, it is likely that a plurality of antennas are used in MIMO (Multiple Input Multiple Output) and radio communication is carried out by using multiple layers. In this case, the beam patterns might increase. In cases like this, according to the fourth example, CSI-RSs can be multiplexed not only in the frequency direction, but can also be multiplexed in the time direction -- that is, along the direction of subframes. By using consecutive CSI-RSs in this way, for example, it is possible to multiplex CSI-RSs for a plurality of user terminals. By this means, even when MIMO is employed and a plurality of antennas are used, it is still possible to measure CSI.

### (Skipping reporting)

Note that, in each CSI-RS transmission period, a user terminal determines whether or not a CSI-RS has been actually transmitted, based on LBT. When judging that a CSI-RS has not been transmitted, the user terminal does not have to send a report to the radio base station even if periodic or aperiodic reporting of CSI is configured.

Structures according to the first example to the fourth example have been described above, and it is equally possible to use each example individually, or use a plurality of examples in combinations.

Note that, as has been described above, in the structures illustrated in the first example to the fourth example, a radio base station may configure information that indicates whether or not CSI-RSs are transmitted without being multiplexed with data and/or control signals, in user terminals. Also, in order to transmit CSI-RSs in resource locations that are configured for user terminals, the radio base station may make the LBT mechanism to use for CSI-RSs different from the LBT mechanism to use for DL data. In this case, for example, it may be possible to remove random back-off from the LBT mechanism to use for CSI-RSs.

Also, when CSI-RSs are transmitted using above methods of (A) to (C), if a CSI-RS is transmitted successfully, the radio base station may "skip" (or "drop") transmitting a CSI-RS again for a certain period following the time the CSI-RS was transmitted.

Also, although the radio base station has been described to transmit CSI-RS Conf. information on a per user terminal basis (UE specific) in advance, this is by no means limiting. For example, it is possible to change CSI-RS Conf. information on a dynamic basis. In this case, an explicit method to use signals may be used, or an implicit method may be used.

### (Structure of Radio Communication System)

Now, the structure of the radio communication system according to an embodiment of the present invention will be described below. In this radio communication system, the radio communication methods according to the embodiments of the present invention are employed. Note that the radio communication methods of the above-described examples may be applied individually or may be applied in combination.

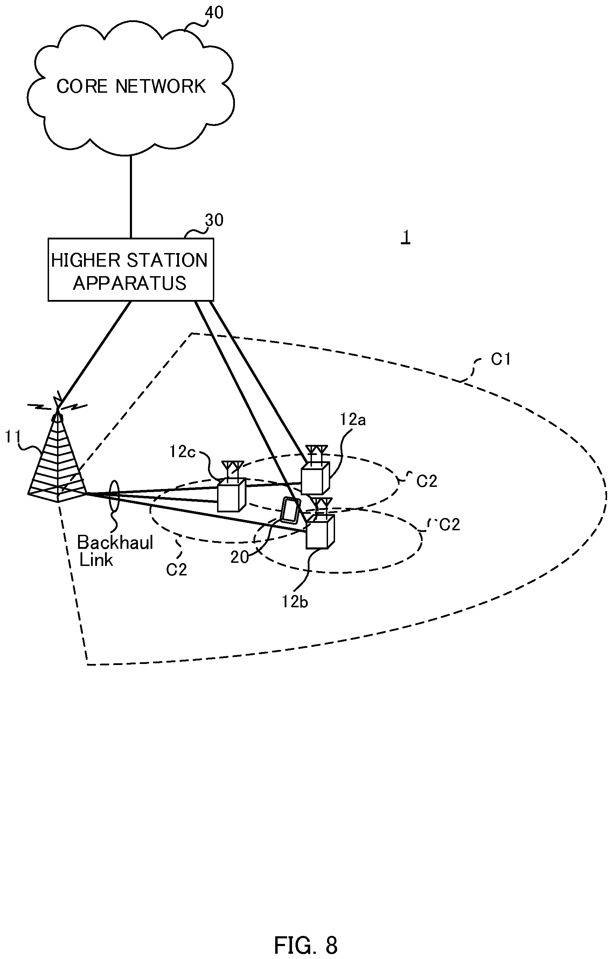

FIG. 8 is a diagram to illustrate an example of a schematic structure of a radio communication system according to an embodiment of the present invention. Note that the radio communication system illustrated in FIG. 8 is a system to incorporate, for example, an LTE system, super 3G, an LTE-A system and so on. In this radio communication system, carrier aggregation (CA) and/or dual connectivity (DC) to bundle multiple component carriers (CCs) into one can be used. Also, these multiple CCS include licensed band CCs to use licensed bands and unlicensed band CCs to use unlicensed bands may be included. Note that this radio communication system may be referred to as "IMT-Advanced," or may be referred to as "4G," "5G," "FRA" (Future Radio Access) and so on.

The radio communication system 1 illustrated in FIG. 8 includes a radio base station 11 that forms a macro cell C1, and radio base stations 12 (12a to 12c) that form small cells C2, which are placed within the macro cell C1 and which are narrower than the macro cell C1. Also, user terminals 20 are placed in the macro cell C1 and in each small cell C2.

The user terminals 20 can connect with both the radio base station 11 and the radio base stations 12. The user terminals 20 may use the macro cell C1 and the small cells C2, which use different frequencies, at the same time, by means of CA or DC. Also, the user terminals 20 can execute CA by using at least two CCs (cells), or use six or more CCs.

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz and so on) and a wide bandwidth may be used, or the same carrier as that used in the radio base station 11 may be used. Between the radio base station 11 and the radio base stations 12 (or between two radio base stations 12), wire connection (optical fiber, the X2 interface, etc.) or wireless connection may be established.

The radio base station 11 and the radio base stations 12 are each connected with a higher station apparatus 30, and are connected with a core network 40 via the higher station apparatus 30. Note that the higher station apparatus 30 may be, for example, an access gateway apparatus, a radio network controller (RNC), a mobility management entity (MME) and so on, but is by no means limited to these. Also, each radio base station 12 may be connected with higher station apparatus 30 via the radio base station 11.

Note that the radio base station 11 is a radio base station having a relatively wide coverage, and may be referred to as a "macro base station," a "central node," an "eNB" (eNodeB), a "transmitting/receiving point" and so on. Also, the radio base stations 12 are radio base stations having local coverages, and may be referred to as "small base stations," "micro base stations," "pico base stations," "femto base stations," "HeNBs" (Home eNodeBs), "RRHs" (Remote Radio Heads), "transmitting/receiving points" and so on. Hereinafter the radio base stations 11 and 12 will be collectively referred to as "radio base stations 10," unless specified otherwise. The user terminals 20 are terminals to support various communication schemes such as LTE, LTE-A and so on, and may be either mobile communication terminals or stationary communication terminals.

In the radio communication system, as radio access schemes, OFDMA (Orthogonal Frequency Division Multiple Access) is applied to the downlink, and SC-FDMA (Single-Carrier Frequency Division Multiple Access) is applied to the uplink. OFDMA is a multi-carrier communication scheme to perform communication by dividing a frequency band into a plurality of narrow frequency bands (subcarriers) and mapping data to each subcarrier. SC-FDMA is a single-carrier communication scheme to mitigate interference between terminals by dividing the system band into bands formed with one or continuous resource blocks per terminal, and allowing a plurality of terminals to use mutually different bands. Note that the uplink and downlink radio access schemes are by no means limited to the combination of these.

In the radio communication system 1, a downlink shared channel (PDSCH: Physical Downlink Shared CHannel), which is used by each user terminal 20 on a shared basis, a broadcast channel (PBCH: Physical Broadcast CHannel), downlink L1/L2 control channels and so on are used as downlink channels. User data, higher layer control information and predetermined SIBs (System Information Blocks) are communicated in the PDSCH. Also, MIBs (Master Information Blocks) and so on are communicated by the PBCH.

The downlink L1/L2 control channels include a PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel) and so on. Downlink control information (DCI) including PDSCH and PUSCH scheduling information is communicated by the PDCCH. The number of OFDM symbols to use for the PDCCH is communicated by the PCFICH. HARQ delivery acknowledgement signals (ACKs/NACKs) in response to the PUSCH are communicated by the PHICH. The EPDCCH may be frequency-division-multiplexed with the PDSCH (downlink shared data channel) and used to communicate DCI and so on, like the PDCCH.

Also, as downlink reference signals, cell-specific reference signals (CRSs), channel state measurement reference signals (CSI-RSs: Channel State Information-Reference Signals), user-specific reference signals (DM-RSs: Demodulation Reference Signals) for use for demodulation, and other signals are included.

In the radio communication system 1, an uplink shared channel (PUSCH: Physical Uplink Shared CHannel), which is used by each user terminal 20 on a shared basis, an uplink control channel (PUCCH: Physical Uplink Control CHannel), a random access channel (PRACH: Physical Random Access CHannel) and so on are used as uplink channels. User data and higher layer control information are communicated by the PUSCH. Also, downlink radio quality information (CQI: Channel Quality Indicator), delivery acknowledgment signals (HARQ-ACKs) and so on are communicated by the PUCCH. By means of the PRACH, random access preambles (RA preambles) for establishing connections with cells are communicated.

### <Radio base station>

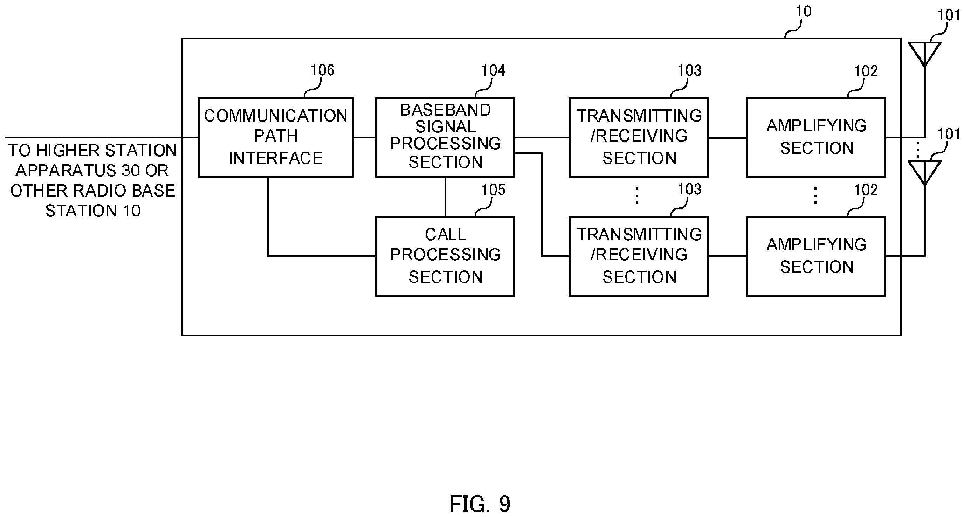

FIG. 9 is a diagram to illustrate an example of an overall structure of a radio base station according to an embodiment of the present invention. A radio base station 10 has a plurality of transmitting/receiving antennas 10, amplifying sections 102, transmitting/receiving sections 103, a baseband signal processing section 104, a call processing section 105 and a communication path interface 106. Note that the transmitting/receiving sections 103 are comprised of transmission sections and receiving sections.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Each transmitting/receiving section 103 converts baseband signals that are pre-coded and output from the baseband signal processing section 104 on a per antenna basis, into a radio frequency band. The radio frequency signals having been subjected to frequency conversion in the transmitting/receiving sections 103 are amplified in the amplifying sections 102, and transmitted from the transmitting/receiving antennas 101.

Meanwhile, as for uplink signals, radio frequency signals that are received in the transmitting/receiving antennas 101 are each amplified in the amplifying sections 102. Each transmitting/receiving section 103 receives uplink signals amplified in the amplifying sections 102. The received signals are converted into the baseband signal through frequency conversion in the transmitting/receiving sections 103 and output to the baseband signal processing section 104.

For example, the transmitting/receiving sections (transmission sections) 103 transmit channel state information (CSI) measurement reference signals (RSs). For the channel state information measurement reference signals, it is possible to use CSI-RSs, use CRSs, or use other reference signals with which channel state information can be measured. In the cases to be described below, CSI-RSs will be used as channel state information measurement reference signals. The transmitting/receiving sections (transmission sections) 103 transmit a CSI-RS that is comprised of two consecutive OFDM symbols as one CSI-RS.

Also, the transmitting/receiving sections (transmission sections) 103 can transmit information about various parameters that are necessary to receive CSI-RSs, including, for example, the cycle, the subframe offset and the resource configuration of CSI-RS, to the user terminals 20, as CSI-RS configurations (CSI-RS Conf.), and configure these parameters in the user terminals 20. Also, the transmitting/receiving sections (transmission sections) 103 can transmit information about various parameters, such as information about a certain range (CMTC: CSI Measurement Timing Configuration) in which CSI-RSs may be transmitted, to the user terminals 20, and configure these parameters in the user terminal 20.

Also, the transmitting/receiving sections (receiving sections) 103 receive channel state information (CSI) that corresponds to CSI-RSs. Furthermore, the transmitting/receiving sections (receiving sections) 103 receive capabilities, which indicate, for example, the measurement capabilities of the user terminals 20. The capabilities may be, for example, information that indicates whether a user terminal 20 is capable of receiving consecutive CSI-RSs, the number of CSI-RSs which a user terminal 20 can receive in a row, and so on. Furthermore, when DL-LBT that is executed before a DL signal is transmitted yields the result of LBT-idle, the transmitting/receiving sections 103 can transmit DL signals in unlicensed bands. Note that, for the transmitting/receiving sections 103, transmitters/receivers, transmitting/receiving circuits or transmitting/receiving devices that can be described based on common understanding of the technical field to which the present invention pertains can be used.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing such as setting up and releasing communication channels, manages the state of the radio base stations 10 and manages the radio resources.

The communication path interface section 106 transmits and receives signals to and from the higher station apparatus 30 via a predetermined interface. The communication path interface 106 transmits and receives signals to and from neighboring radio base stations 10 (backhaul signaling) via an inter-base station interface (for example, optical fiber, the X2 interface, etc.).

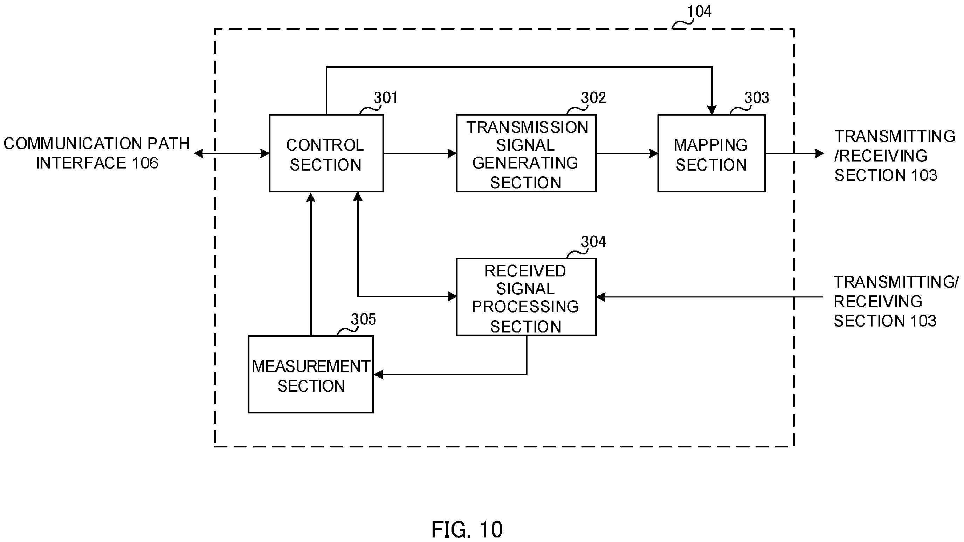

FIG. 10 is a diagram to illustrate an example of a functional structure of a radio base station according to the present embodiment. Note that, although FIG. 10 primarily illustrates functional blocks that pertain to characteristic parts of the present embodiment, the radio base station 10 has other functional blocks that are necessary for radio communication as well. As illustrated in FIG. 10, the baseband signal processing section 104 has a control section (scheduler) 301, a transmission signal generating section (generating section) 302, a mapping section 303, a received signal processing section 304 and a measurement section 305.

The control section (scheduler) 301 controls the scheduling (for example, resource allocation) of downlink data signals that are transmitted in the PDSCH and downlink control signals that are communicated in the PDCCH and/or the EPDCCH. Furthermore, the control section (scheduler) 301 also controls the scheduling of system information, synchronization signals, paging information, CRSs, CSI-RSs and so on.

Also, the control section 301 controls the scheduling of uplink reference signals, uplink data signals that are transmitted in the PUSCH, uplink control signals that are transmitted in the PUCCH and/or the PUSCH, random access preambles that are transmitted in the PRACH, and so on. Also, the control section 301 controls the transmission of DL signal based on the result of listening (DL LBT).

Also, when applying DL LBT to the transmission of CSI-RSs, the control section 301 may execute LBT that is based on CCA. For example, control section 301 may employ LBT that is based on a single CC, or employ LBT that is based on extended CCA. Furthermore, when it is confirmed that the channel is in the idle state based on the result of performing CCA, the control section 301 may then transmit an initial signal (IS), and, furthermore, transmit an CSI-RS. Also, when the result of performing CCA confirms that the channel is in the idle state, the control section may then transmit an IS, transmit a detection preamble, and transmit a CSI-RS following the detection preamble. By this means, it is possible to prevent devices other than the subject radio base station 10 or the user terminals 20 from occupying the channel. Also, when the result of performing CCA shows that the channel is not in the idle state, the control section 301 may not execute CCA for a predetermined period, or may continue executing CCA for a predetermined period, and transmit an IS at the timing the channel enters the idle state.

Also, the control section 301 can control the signals to transmit from the transmitting/receiving sections 103 based on whether CSI-RSs are transmitted from the transmitting/receiving sections 103 to the user terminals 20 without being multiplexed with data and control signal. To be more specific, when CSI-RSs are transmitted from the transmitting/receiving sections 103 without being multiplexed with data and/or control signals, the control section 301 may configure CSI-RS cycle information, subframe offset information and so on, as CSI-RS Conf. parameter information to configure in the user terminals 20 that are subject to measurements. Also, as CSI-RS Conf. parameter information, the control section 301 may configure a CMTC (CSI Measurement Timing Configuration) that indicates a certain range in which CSI-RSs may be transmitted. Furthermore, the control section 301 may configure this configuration information in the user terminals 20, and control the user terminals 20 to be on standby to receive CSI-RSs. Also, it is equally possible to control CSI-RS Conf. such that common CSI-RS Conf. is transmitted regardless of whether or not the CSI-RSs are transmitted without being multiplexed with data and/or control signals. Also, as for CSI-RS Conf., it is equally possible to transmit CSI-RSs alone, without multiplexing with data and/or control signals, and set up configurations only with respect to those CSI-RSs that are multiplexed. Also, the control section 301 may use CSI-RSs alone.

Also, the control section 301 may apply CCA to CSI-RSs as DL LBT, and, control CSI-RSs to be transmitted without random back-off when the channel is in the idle state. Also, when the result of applying CCA shows that the channel is occupied by another device, the control section 301 may control CCA not to be executed for predetermined period, and also control CCA to be executed for a predetermined period. Also, this predetermined period may be one that is determined in advance, or may be reported to the user terminals 20 through higher layer signaling.

Also, the control section 301 may control the number of CSI-RSs to be transmitted in a row from the transmitting/receiving sections 103 in the subframe direction based on capabilities transmitted from the user terminals 20.

The transmission signal generating section 302 generates DL signals based on commands from the control section 301 and outputs these signals to the mapping section 303. For example, the transmission signal generating section 302 generates DL assignments, which report downlink signal allocation information, and UL grants, which report uplink signal allocation information, based on commands from the control section 301. Also, the transmission signal generating section 302 can include information about the LBT to apply to UL transmission, in DL signals transmitted in unlicensed bands. Also, the transmission signal generating section 302 can include information as to whether or not UL-LBT is applied, in UL grants. Note that, for the transmission signal generating section 302, a signal generator, a signal generating circuit or a signal generating device that can be described based on common understanding of the technical field to which the present invention pertains can be used.

The mapping section 303 maps the downlink signals generated in the transmission signal generating section 302 to predetermined radio resources based on commands from the control section 301, and outputs these to the transmitting/receiving sections 103. Note that, for the mapping section 303, mapper, a mapping circuit or a mapping device that can be described based on common understanding of the technical field to which the present invention pertains can be used.

The receiving process section 304 performs receiving processes (for example, demapping, demodulation, decoding and so on) of UL signals (for example, delivery acknowledgement signals (HARQ-ACKs), data signals that are transmitted in the PUSCH, and so on) transmitted from the user terminals. The processing results are output to the control section 301. For the received signal processing section 304, a signal processor/measurer, a signal processing/measurement circuit or a signal processing/measurement device that can be described based on common understanding of the technical field to which the present invention pertains can be used.

Also, by using the received signals, the measurement section 305 may measure the received power (for example, the RSRP (Reference Signal Received Power)), the received quality (for example, the RSRQ (Reference Signal Received Quality)), channel states and so on. Also, upon listening before DL signal transmission in unlicensed bands, the measurement section 305 can measure the received power of signals transmitted from other systems and/or the like. The results of measurements in the measurement section 305 are output to the control section 301. The control section 301 can control the transmission of DL signals based on measurement results (listening results) in the measurement section 305.

The measurement section 305 can be constituted by a measurer, a measurement circuit or a measurement device that can be described based on common understanding of the technical field to which the present invention pertains.

### <User terminal>

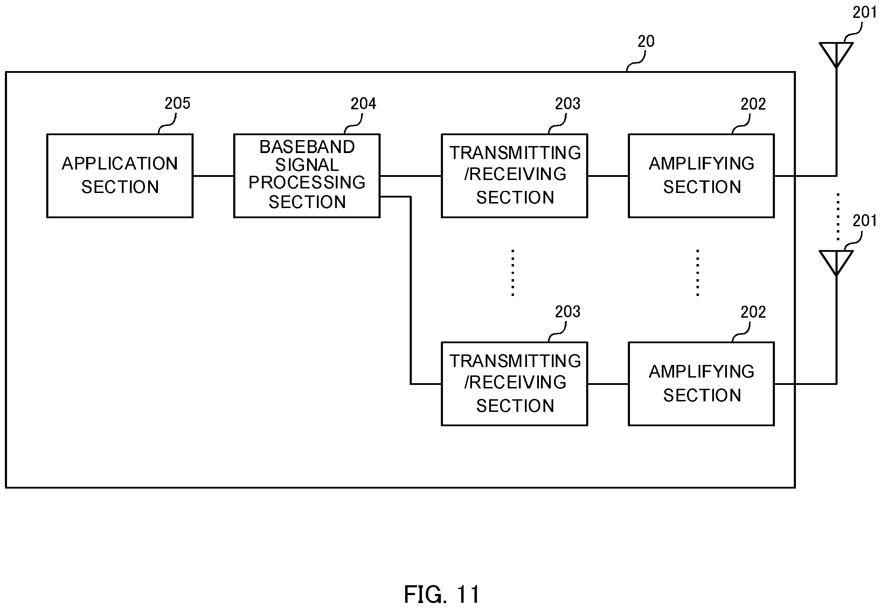

FIG. 11 is a diagram to illustrate an example of an overall structure of a user terminal according to the present embodiment. A user terminal 20 has a plurality of transmitting/receiving antennas 201 for MIMO communication, amplifying sections 202, transmitting/receiving sections 203, a baseband signal processing section 204 and an application section 205. Note that the transmitting/receiving sections 203 may be comprised of transmission sections and receiving sections.

Radio frequency signals that are received in a plurality of transmitting/receiving antennas 201 are each amplified in the amplifying sections 202. Each transmitting/receiving section 203 receives the downlink signals amplified in the amplifying sections 202. The received signals are subjected to frequency conversion and converted into the baseband signal in the transmitting/receiving sections 203, and output to the baseband signal processing section 204.

The transmitting/receiving sections (receiving sections) 203 can receive the CSI-RSs and so on that are transmitted from the radio base station 10. Also, as CSI-RSs, the transmitting/receiving section (receiving section) 203 can not only receive CSI-RSs that are not multiplexed with data and/or control signals, but also can receive ones that are included in DL data, ones that are included in DL DRSs (Discovery Reference Signals) and so on. Furthermore, the transmitting/receiving sections (receiving sections) 203 can receive various pieces of parameter information that are transmitted from the radio base station 10 via higher layer signaling. Also, as CSI-RSs, the transmitting/receiving section (receiving section) 203 can transmit not only one CSI-RS, but can also transmit a plurality of CSI-RSs.

Furthermore, the transmitting/receiving sections (transmission sections) 203 can transmit CSI to the radio base station 10 based on CSI-RSs transmitted from the radio base station 10. Furthermore, the transmitting/receiving sections (transmission sections) 203 can transmit capabilities, which indicate whether or not the user terminal is capable of receiving a plurality of CSI-RSs, to the radio base station 10. Note that, for the transmitting/receiving sections 203, transmitters/receivers, transmitting/receiving circuits or transmitting/receiving devices that can be described based on common understanding of the technical field to which the present invention pertains can be used.

In the baseband signal processing section 204, the baseband signal that is input is subjected to an FFT process, error correction decoding, a retransmission control receiving process, and so on. Downlink user data is forwarded to the application section 205. The application section 205 performs processes related to higher layers above the physical layer and the MAC layer, and so on. Furthermore, in the downlink data, broadcast information is also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, pre-coding, a discrete Fourier transform (DFT) process, an IFFT process and so on, and the result is forwarded to each transmitting/receiving section 203. The baseband signal that is output from the baseband signal processing section 204 is converted into a radio frequency band in the transmitting/receiving sections 203. The radio frequency signals that are subjected to frequency conversion in the transmitting/receiving sections 203 are amplified in the amplifying sections 202, and transmitted from the transmitting/receiving antennas 201.

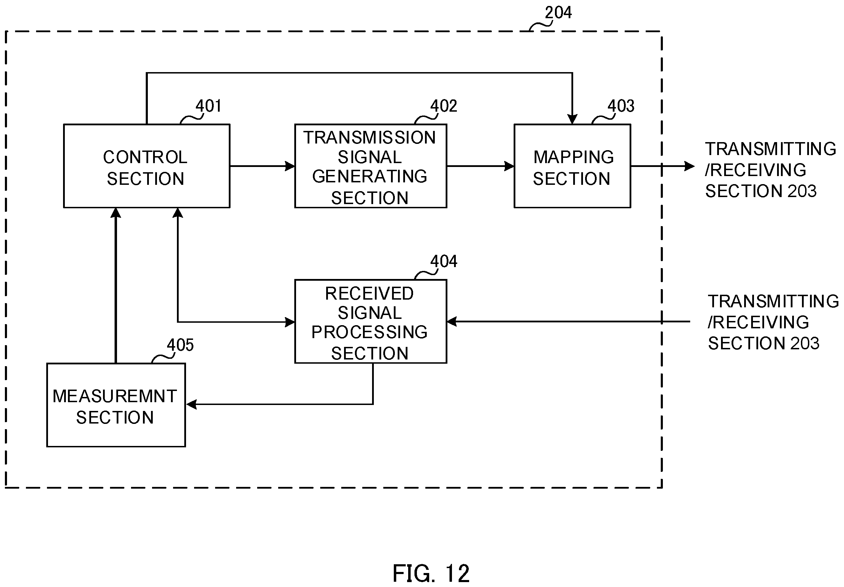

FIG. 12 is a diagram to illustrate an example of a functional structure of a user terminal according to the present embodiment. Note that, although FIG. 12 primarily illustrates functional blocks that pertain to characteristic parts of the present embodiment, the user terminal 20 has other functional blocks that are necessary for radio communication as well. As illustrated in FIG. 12, the baseband signal processing section 204 provided in the user terminal 20 has a control section 401, a transmission signal generating section 402, a mapping section 403, a received signal processing section 404 and a measurement section 405.

The control section 401 can control the transmission signal generating section 402, the mapping section 403 and the received signal processing section 404. For example, the control section 401 acquires the downlink control signals (signals transmitted in the PDCCH/EPDCCH) and downlink data signals (signals transmitted in the PDSCH) transmitted from the radio base station 10, from the received signal processing section 404. The control section 401 controls the generation/transmission (UL transmission) of uplink control signals (for example, HARQ-ACKs and so on) and uplink data based on downlink control information (UL grants), the result of deciding whether or not retransmission control is necessary for downlink data, and so on. Also, the control section 401 controls the transmission of UL signals based on the result of listening (UL LBT).

The control section 401 controls CSI to be measured based on CSI-RSs transmitted from the radio base station 10, and channel information to be reported to the radio base station 10. Also, the control section 401 may control CSI-RSs to be received based on detection preambles that are received in the transmitting/receiving sections (receiving sections) 203. The control section 401 may control the transmitting/receiving sections (receiving sections) 203 to receive CSI-RSs directly. Furthermore, the control section 401 may control the transmitting/receiving sections (receiving sections) 203 to be on standby to receive detection preamble signals or CSI-RSs, for a predetermined period.

Also, when the radio base station 10 transmits a CSI-RS successfully, the control section 401 may determine that CSI-RSs are not transmitted (skipped) for a predetermined period. Furthermore, in each CSI-RS transmission period that is configured by the radio base station 10, the control section 401 may determine whether or not a CSI-RS is in fact transmitted, based on the received level and/or the like, and, when it is determined that a CSI-RS is not transmitted, the control section 401 may control reports not to be transmitted, even if periodic/aperiodic reporting is configured. Note that, for the control section 401, a controller, a control circuit or a control device that can be described based on common understanding of the technical field to which the present invention pertains can be used.

The transmission signal generating section 402 generates UL signals based on commands from the control section 401, and outputs these signals to the mapping section 403. For example, the transmission signal generating section 402 generates uplink control signals such as delivery acknowledgement signals (HARQ-ACKs) in response to DL signals, channel state information (CSI) and so on, based on commands from the control section 401.

Also, the transmission signal generating section 402 generates uplink data signals based on commands from the control section 401. For example, when a UL grant is included in a downlink control signal that is reported from the radio base station 10, the control section 401 commands the transmission signal generating section 402 to generate an uplink data signal. For the transmission signal generating section 402, a signal generator, a signal generating circuit or a signal generating device that can be described based on common understanding of the technical field to which the present invention pertains can be used.

The mapping section 403 maps the uplink signals (uplink control signals and/or uplink data) generated in the transmission signal generating section 402 to radio resources based on commands from the control section 401, and output the result to the transmitting/receiving sections 203. For the mapping section 403, mapper, a mapping circuit or a mapping device that can be described based on common understanding of the technical field to which the present invention pertains can be used.

The received signal processing section 404 performs the receiving processes (for example, demapping, demodulation, decoding and so on) of the DL signals (for example, downlink control signals that are transmitted from the radio base station in the PDCCH/EPDCCH, downlink data signals transmitted in the PDSCH, and so on). The received signal processing section 404 outputs the information received from the radio base station 10, to the control section 401 and the measurement section 405. Note that, for the received signal processing section 404, a signal processor/measurer, a signal processing/measurement circuit or a signal processing/measurement device that can be described based on common understanding of the technical field to which the present invention pertains can be used. Also, the received signal processing section 404 can constitute the receiving section according to the present invention.

Also, the measurement section 405 measures channel states based on channel state information measurement reference signals transmitted from the radio base station 10. Also, the measurement section 405 may measure the received power (for example, the RSRP (Reference Signal Received Power)), the received quality (for example, the RSRQ (Reference Signal Received Quality)), channel states and so on. Furthermore, upon listening that is executed before UL signals are transmitted in unlicensed bands, the measurement section 405 can measure the received power of signals transmitted from other systems and so on. The results of measurements in the measurement section 405 are output to the control section 401. The control section 401 can control the transmission of UL signals based on measurement results (listening results) in the measurement section 405.

The measurement section 405 can be constituted by a measurer, a measurement circuit or a measurement device that can be described based on common understanding of the technical field to which the present invention pertains.

Note that the block diagrams that have been used to describe the above embodiments illustrate blocks in functional units. These functional blocks (components) may be implemented in arbitrary combinations of hardware and software. Also, the means for implementing each functional block is not particularly limited. That is, each functional block may be implemented with one physically-integrated device, or may be implemented by connecting two physically-separate devices via radio or wire and using these multiple devices.

For example, part or all of the functions of radio base stations 10 and user terminals 20 may be implemented using hardware such as ASICs (Application-Specific Integrated Circuits), PLDs (Programmable Logic Devices), FPGAs (Field Programmable Gate Arrays), and so on. Also, the radio base stations 10 and user terminals 20 may be implemented with a computer device that includes a processor (CPU), a communication interface for connecting with networks, a memory and a computer-readable storage medium that holds programs. That is, radio base stations and user terminals according to one embodiment of the present invention may function as computers that execute the processes of the radio communication method of the present invention.

Here, the processor and the memory are connected with a bus for communicating information. Also, the computer-readable recording medium is a storage medium such as, for example, a flexible disk, an opto-magnetic disk, a ROM, an EPROM, a CD-ROM, a RAM, a hard disk and so on. Also, the programs may be transmitted from the network through, for example, electric communication channels. Also, the radio base stations 10 and user terminals 20 may include input devices such as input keys and output devices such as displays.

The functional structures of the radio base stations 10 and user terminals 20 may be implemented with the above-described hardware, may be implemented with software modules that are executed on the processor, or may be implemented with combinations of both. The processor controls the whole of the user terminals by running an operating system. Also, the processor reads programs, software modules and data from the storage medium into the memory, and executes various types of processes.

Here, these programs have only to be programs that make a computer execute each operation that has been described with the above embodiments. For example, the control section 401 of the user terminals 20 may be stored in the memory and implemented by a control program that operates on the processor, and other functional blocks may be implemented likewise.

Also, software and commands may be transmitted and received via communication media. For example, when software is transmitted from a website, a server or other remote sources by using wired technologies such as coaxial cables, optical fiber cables, twisted-pair cables and digital subscriber lines (DSL) and/or wireless technologies such as infrared radiation, radio and microwaves, these wired technologies and/or wireless technologies are also included in the definition of communication media.

Note that the terminology used in this description and the terminology that is needed to understand this description may be replaced by other terms that convey the same or similar meanings. For example, "channels" and/or "symbols" may be replaced by "signals" (or "signaling"). Also, "signals" may be "messages." Furthermore, "component carriers" (CCs) may be referred to as "carrier frequencies," "cells" and so on.

Also, the information and parameters described in this description may be represented in absolute values or in relative values with respect to a predetermined value, or may be represented in other information formats. For example, radio resources may be specified by indices.

The information, signals and/or others described in this description may be represented by using a variety of different technologies. For example, data, instructions, commands, information, signals, bits, symbols and chips, all of which may be referenced throughout the description, may be represented by voltages, currents, electromagnetic waves, magnetic fields or particles, optical fields or photons, or any combination of these.

The examples/embodiments illustrated in this description may be used individually or in combinations, and the mode of may be switched depending on the implementation. Also, a report of predetermined information (for example, a report to the effect that "X holds") does not necessarily have to be sent explicitly, and can be sent implicitly (by, for example, not reporting this piece of information).

Reporting of information is by no means limited to the examples/embodiments described in this description, and other methods may be used as well. For example, reporting of information may be implemented by using physical layer signaling (for example, DCI (Downlink Control Information) and UCI (Uplink Control Information)), higher layer signaling (for example, RRC (Radio Resource Control) signaling, MAC (Medium Access Control) signaling, and broadcast information (MIBs (Master Information Blocks) and SIBs (System Information Blocks))), other signals or combinations of these. Also, RRC signaling may be referred to as "RRC messages," and can be, for example, an RRC connection setup message, RRC connection reconfiguration message, and so on.

The examples/embodiments illustrated in this description may be applied to LTE (Long Term Evolution), LTE-A (LTE-Advanced), SUPER 3G, IMT-Advanced, 4G, 5G, FRA (Future Radio Access), CDMA 2000, UMB (Ultra Mobile Broadband), IEEE 802.11 (Wi-Fi), IEEE 802.16 (WiMAX), IEEE 802.20, UWB (Ultra-WideBand), Bluetooth (registered trademark), and other adequate systems, and/or next-generation systems that are enhanced based on these.

The order of processes, sequences, flowcharts and so on that have been used to describe the examples/embodiments herein may be re-ordered as long as inconsistencies do not arise. For example, although various methods have been illustrated in this description with various components of steps in exemplary orders, the specific orders that illustrated herein are by no means limiting.

Now, although the present invention has been described in detail above, it should be obvious to a person skilled in the art that the present invention is by no means limited to the embodiments described herein. The present invention can be implemented with various corrections and in various modifications, without departing from the spirit and scope of the present invention defined by the recitations of claims. Consequently, the description herein is provided only for the purpose of explaining examples, and should by no means be construed to limit the present invention in any way.

The disclosure of Japanese Patent Application No. 2015-159947, filed on August 13, 2015, including the specification, drawings and abstract, is incorporated herein by reference in its entirety.

## Claims

1. A radio base station comprising:
a transmission section that transmits a channel state information measurement reference signal; and
a control section that controls transmission of the channel state information measurement reference signal by employing listening,
wherein the control section controls the channel state information measurement reference signal to be transmitted without being multiplexed with data and/or a control signal, and controls configuration information of the channel state information measurement reference signal that is transmitted without being multiplexed with data and/or a control signal to be transmitted.

2. The radio base station according to claim 1, wherein the transmission section transmits a channel state information measurement reference signal that is multiplexed with a DL DRS (DownLink Discovery Reference Signal) and/or a PDSCH (Physical Downlink Shared Channel).

3. The radio base station according to claim 1 or claim 2, wherein, when transmission is determined to be possible based on a result of listening, the transmission section transmits the channel state information measurement reference signal that is transmitted without being multiplexed with data and/or a control signal, without applying random back-off.

4. The radio base station according to one of claim 1 to claim 3, wherein the control section controls a preamble signal to be transmitted before the channel state information measurement reference signal that is transmitted without being multiplexed with data and/or a control signal is transmitted.

5. The radio base station according to one of claim 1 to claim 3, wherein, after the channel state information measurement reference signal that is transmitted without being multiplexed with data and/or a control signal is transmitted, the transmission section suspends transmission of a channel state information measurement reference signal for a predetermined period.

6. The radio base station according to one of claim 1 to claim 5, wherein the transmission section transmits a plurality of channel state measurement reference signals in a row in a plurality of subframes.

7. The radio base station according to one of claim 1 to claim 6, wherein, as the channel state information measurement reference signal that is transmitted without being multiplexed with data and/or a control signal, the transmission section transmits a CSI-RS (Channel State Information-Reference Signal) without multiplexing with data and/or a control signal.

8. A user terminal comprising:
a receiving section that receives a channel state information measurement reference signal, to which listening has been applied prior to transmission; and
a transmission section that transmits channel state information that corresponds to the channel state information measurement reference signal,
wherein the receiving section receives the channel state information measurement reference signal that is transmitted without being multiplexed with data and/or a control signal, and receives configuration information of the channel state information measurement reference signal that is transmitted without being multiplexed with data and/or a control signal.

9. The user terminal according to claim 8, wherein channel state information is measured at a given timing within a predetermined range from a time indicated by the configuration information.

10. A radio communication method comprising the steps of:
transmitting a channel state information measurement reference signal; and
controlling transmission of the channel state information measurement reference signal by employing listening,
wherein, in the control step, the channel state information measurement reference signal is controlled to be transmitted without being multiplexed with data and/or a control signal, and configuration information of the channel state information measurement reference signal that is transmitted without being multiplexed with data and/or a control signal is controlled to be transmitted.
